(19) Europäisches Patentamt
European Patent Office
Office européen des brevets

(11) **EP 1 582 458 B1**

(12) **FASCICULE DE BREVET EUROPEEN**

(45) Date de publication et mention
de la délivrance du brevet:
**23.05.2007 Bulletin 2007/21**

(51) Int Cl.:
*B64D 11/00* (2006.01)     *H02J 13/00* (2006.01)

(21) Numéro de dépôt: **05290648.4**

(22) Date de dépôt: **24.03.2005**

(54) **Cabine d'avion équipée de moyens de gestion de la puissance consommée par des actionneurs de siège**

Flugzeugkabine mit einer Vorrichtung zum Management des Stromverbrauchs der Sitzverstellmotoren

Aircraft cabin with seat actuator power management system

(84) Etats contractants désignés:
**DE FR GB IT**

(30) Priorité: **31.03.2004 FR 0403404**

(43) Date de publication de la demande:
**05.10.2005 Bulletin 2005/40**

(73) Titulaire: **Precilec**
**89000 Auxerre (FR)**

(72) Inventeurs:
• **Marin-Martinod, Thierry**
**95690 Nesles-La-Vallée (FR)**
• **Robert, Jean-Claude**
**93340 Le Raincy (FR)**

(74) Mandataire: **Blot, Philippe Robert Emile et al**
**Cabinet Lavoix**
**2, place d'Estienne d'Orves**
**75441 Paris Cedex 09 (FR)**

(56) Documents cités:
WO-A-02/076825          WO-A-03/082672
FR-A- 2 823 027          US-A- 5 739 746
US-A- 5 748 473

**Description**

La présente invention concerne une cabine d'un avion, du type comportant :

- au moins deux sièges comportant chacun au moins deux éléments mobiles l'un par rapport à l'autre et au moins un actionneur pour le déplacement relatif de ces éléments mobiles,
- au moins une unité centrale de gestion de puissance dans la cabine pour allouer une puissance totale disponible à chaque siège.

Dans les avions de transport de passagers, il est nécessaire de mettre à disposition de chaque passager, un certain nombre d'équipements alimentés électriquement, ces équipements assurant un confort maximal du passager.

En particulier, chaque passager dispose couramment d'un éclairage individuel désigné par liseuse, d'une prise d'alimentation pour un ordinateur portable, d'un équipement vidéo pour la visualisation de films, d'équipements de confort tels que des dispositifs de massage et d'un ensemble d'actionneurs électriques permettant le déplacement des éléments mobiles du siège du passager.

La multiplication des dispositifs alimentés électriquement mis à la disposition de chaque passager augmente considérablement la puissance électrique consommée au sein de la cabine de l'avion.

Ainsi, il est nécessaire de gérer la puissance consommée par les passagers au cours du vol.

A cet effet, il est connu de suivre la puissance électrique effectivement consommée par chaque passager, et d'allouer aux différents passagers une puissance totale disponible propre au passager afin que la somme des puissances totales disponibles allouées soit inférieure à une puissance totale maximale pouvant être allouée aux différents passagers. Une telle gestion de puissance est illustrée par le document FR-A-2 823 027.

Ces procédés fonctionnent de manière satisfaisante, mais ne permettent une gestion de la puissance qu'à partir de la puissance effectivement consommée à un instant donné par les différents passagers.

L'invention a pour but de proposer une installation de gestion de puissance permettant d'optimiser l'utilisation de la puissance disponible dans un avion pour la mettre à disposition des différents passagers.

A cet effet, l'invention a pour objet une cabine d'un avion du type précité, caractérisée en ce que chaque siège comporte des moyens de relevé d'au moins une information morphologique du passager assis sur le siège, et des moyens de transmission de données dépendant de la ou chaque information morphologique vers l'unité centrale de gestion de puissance et ladite unité centrale de gestion de puissance est adaptée pour allouer à chaque siège une puissance totale disponible dépendant de la ou chaque information morphologique.

Le relevé d'au moins une information morphologique de chaque passager permet une gestion prévisionnelle de la puissance dans la cabine de l'avion, avant même que les utilisateurs n'aient eu recours à cette puissance. Ainsi, la gestion de la puissance est optimisée, puisqu'elle tient compte de la puissance que chaque passager est susceptible de requérir et non seulement de la puissance consommée à l'instant considéré.

Suivant des modes particuliers de réalisation, la cabine de l'avion comporte l'une ou plusieurs des caractéristiques suivantes :

- lesdits moyens de relevé comportent un capteur de mesure du poids du passager,
- lesdits moyens de relevé comportent un capteur de mesure de la taille d'au moins une partie du passager,
- elle comporte des moyens de calcul, pour chaque siège, d'une puissance nominale maximale pouvant être consommée par le ou chaque actionneur du siège à partir de la ou chaque information morphologique et des caractéristiques du ou de chaque actionneur, et l'unité centrale de gestion de puissance est adaptée pour allouer à chaque siège une puissance totale disponible dont la valeur dépend des puissances nominales maximales calculées pour chaque siège,
- la puissance totale disponible allouée à chaque siège est d'autant plus grande que la ou chaque puissance nominale maximale calculée pour le siège est grande,
- chaque siège comporte une unité locale de gestion de puissance à laquelle sont reliés les moyens de relevé d'au moins une information morphologique, et en ce que chaque unité locale de gestion de puissance comporte des moyens propres de calcul de la puissance nominale maximale pouvant être consommée par le ou chaque actionneur du siège à partir de la ou chaque information morphologique et des caractéristiques du ou de chaque actionneur,
- chaque unité locale de gestion de puissance comporte des moyens de transmission d'une information dépendant de la ou chaque puissance nominale maximale pouvant être consommée par un actionneur vers l'unité centrale de gestion de puissance ; et
- ladite unité centrale de gestion de puissance comporte des moyens pour adresser à chaque unité locale de gestion de puissance une puissance totale disponible allouée et chaque unité locale de gestion de puissance est propre à commander le ou chaque actionneur pour que la puissance totale consommée soit inférieure à la puissance totale disponible allouée.

L'invention sera mieux comprise à la lecture de la description qui va suivre, donnée uniquement à titre d'exemple et faite en se référant aux dessins, sur lesquels :

- la figure 1 est une vue schématique d'une cabine d'avion selon l'invention ;
- la figure 2 est une vue schématique d'une unité locale de gestion de puissance propre à un abonné de la cabine ; et
- la figure 3 est un organigramme de l'algorithme mis en oeuvre dans l'unité centrale de gestion de puissance de l'installation.

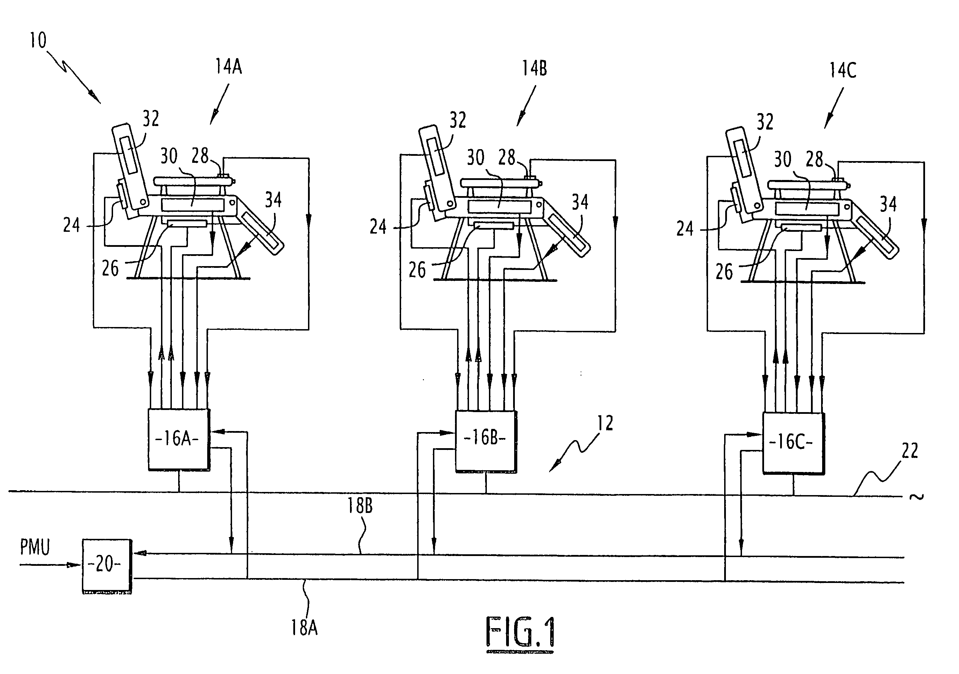

Sur la figure 1 est représentée une cabine d'avion 10 incorporant une installation de gestion de puissance 12.

L'installation comporte un ensemble d'abonnés 14A, 14B, 14C. Chaque abonné est formé de l'ensemble des dispositifs mis à la disposition d'un passager et comprend notamment les actionneurs équipant le siège du passager.

Par exemple, une cabine selon l'invention assure la gestion de la puissance mise à la disposition de soixante dix abonnés de première classe lorsque l'avion est susceptible de transporter trois cents passagers.

Dans l'installation selon l'invention, chaque abonné comporte une unité locale de gestion de puissance. Seules trois unités locales notées 16A, 16B, 16C sont représentées pour des raisons de clarté. Ces unités sont toutes identiques. Chaque unité locale de gestion de puissance est reliée, par un réseau de transmission d'informations bidirectionnel 18, à une unité centrale 20 de gestion de puissance.

A cet effet, le réseau de transmission d'informations 18 est constitué par exemple d'un bus de transfert de données auquel sont reliées l'unité centrale 20 et les unités locales 16A, 16B et 16C. Pour des raisons de clarté, sur les figures, le bus est schématisé par deux liens, l'un descendant, noté 18A, assurant la transmission d'informations de l'unité centrale de gestion de puissance 20 vers chacune des unités locales 16A, 16B, 16C et l'autre montant, noté 18B, assurant la transmission d'informations depuis chaque unité locale 16A, 16B, 16C vers l'unité centrale 20.

En outre, chaque unité locale de gestion de puissance 16A, 16B, 16C est reliée à un réseau collectif de distribution de puissance électrique 22.

Chaque abonné comporte un ensemble de charges consommatrices de puissance électrique. Chaque charge est reliée à l'unité locale de gestion de puissance 16A, 16B, 16C de l'abonné.

Plus précisément, dans l'exemple considéré, un siège motorisé est mis à disposition de chaque passager. Ce siège comporte une assise, un dossier et un repose-jambes. Chaque siège et donc chaque abonné comportent deux actionneurs électriques 24, 26 permettant le déplacement automatique du dossier et du repose-jambes par rapport à l'assise du siège. Ces actionneurs permettent notamment de déplacer le siège d'une position assise à une position couchée.

Chaque actionneur mis à la disposition du passager est commandable individuellement par le passager depuis un clavier 28. Ce clavier est relié à l'unité locale de gestion de puissance 16A, 16B, 16C associée.

En outre, des capteurs de mesures morphologiques du passager sont intégrés dans chaque siège. Ces capteurs sont propres à déterminer des informations morphologiques du passager, tel que son poids ou sa taille.

Ainsi, un capteur de poids 30 est disposé dans l'assise. Ce capteur est formé par exemple d'un élément piézoélectrique.

En outre, des capteurs 32 et 34 de mesure de la taille du passager sont intégrés respectivement dans le dossier et le repose-jambes du siège. Ces capteurs sont par exemple formés tous deux d'une matrice de microcontacts répartis suivant l'essentiel de la surface du dossier et de l'assise.

Au repos, c'est-à-dire en l'absence de poids sur les microcontacts, ceux-ci sont ouverts. En revanche, lorsqu'une charge est appliquée sur un microcontact, celui-ci est fermé.

Lorsqu'un passager est assis sur le siège, les microcontacts se trouvant sous le passager, c'est-à-dire en arrière du tronc ou des jambes du passager, sont fermés, alors que les autres contacts non sollicités par le passager sont maintenus ouverts. Ces capteurs 32, 34 permettent donc respectivement de déterminer la hauteur du tronc $h_t$ et la longueur des jambes $l_j$ du passager à partir du nombre de microcontacts fermés et/ou de leur position.

Le capteur de poids 30 et chacun des microcontacts des matrices de capteurs 32 et 34 sont reliés à l'unité locale de gestion de puissance 16A, 16B, 16C propre au siège considéré.

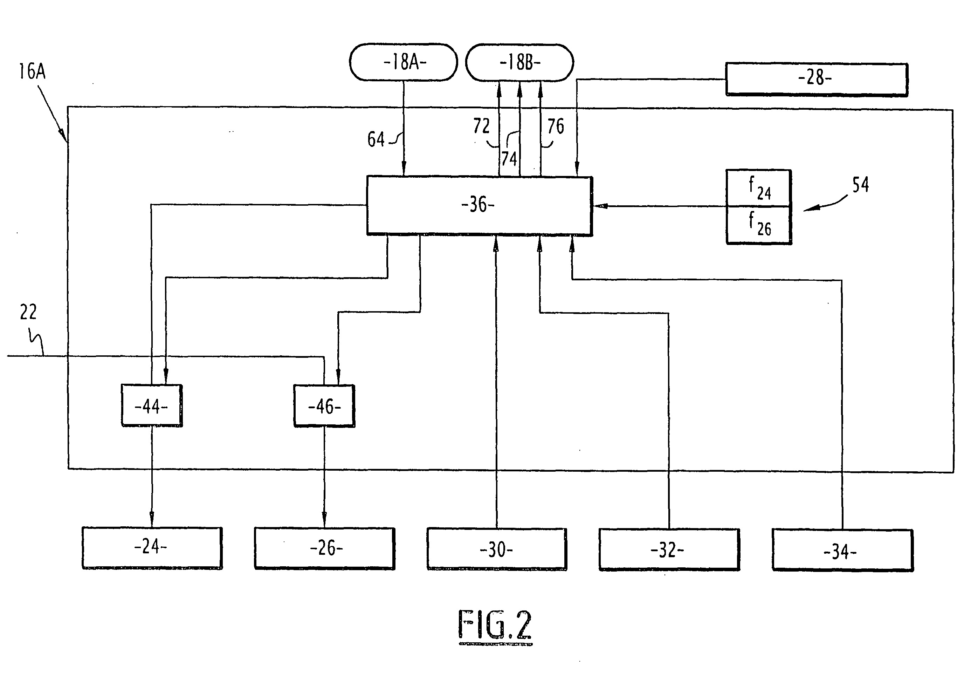

Sur la figure 2 est représentée plus en détail la structure d'une unité locale de gestion de puissance 16A. Cette unité est représentée avec sa liaison au réseau de distribution de puissance 22, aux liens 18A, 18B du réseau de transmission d'informations 18, au clavier 28, aux actionneurs 24, 26 et aux capteurs 30, 32 et 34.

Chaque unité locale de gestion de puissance 16A, 16B, 16C comporte une unité de pilotage 36 constituée d'une unité de traitement d'informations apte à mettre en oeuvre un algorithme prédéterminé. L'unité de pilotage 36 est formée par exemple par un micro-contrôleur associé à un environnement adapté.

L'unité de pilotage 36 est reliée au réseau 18 par une interface de communication bidirectionnelle non représentée.

Chaque actionneur 24, 26 est relié au réseau 22 de distribution de puissance au travers d'un étage de mise en forme du courant d'alimentation, ces étages étant notés 44 et 46, respectivement, pour les charges 24 et 26.

Chaque étage de mise en forme du courant 44, 46 est relié, pour sa commande, à l'unité de pilotage 36.

Sous la commande de l'unité de pilotage 36, chaque étage de mise en forme du courant assure une alimentation ou un arrêt de l'alimentation de la charge reliée en sortie, ou une mise en forme particulière du courant, afin de réduire la puissance consommée par cette charge.

En particulier, les étages 44, 46 de mise en forme du courant d'alimentation sont adaptés pour produire un courant modifiant la vitesse des actionneurs afin de faire varier la puissance consommée.

Cette variation de vitesse est par exemple réalisée à l'aide d'une régulation de type PWM (modulation à largeur d'impulsion).

Dans le mode de réalisation illustré sur la figure 2, l'unité locale de gestion de puissance comporte des moyens de mémorisation 54 reliés à l'unité de pilotage 36.

Ces moyens de mémorisation 54 contiennent, pour chaque actionneur 24, 26 reliée à l'unité locale de gestion de puissance, une fonction caractéristique $f_{24}$, $f_{26}$ de détermination de la puissance nominale maximale pouvant être consommée par l'actionneur en fonction des informations morphologiques du passager relevées sur le siège.

Plus précisément, la fonction caractéristique $f_{24}$, associée à l'actionneur de dossier 24 est propre à déterminer la puissance nominale maximale $P_{24}$ consommée par l'actionneur 24 en fonction du poids p du passager relevé par le capteur 30 et de la hauteur $h_t$ du tronc du passager relevée par le capteur 32.

De même, la fonction caractéristique $f_{26}$ est propre à déterminer la puissance nominale maximale $P_{26}$ consommée par l'actionneur 26 d'entraînement du repose-jambes à partir du poids p du passager mesuré par le capteur 30 et de la longueur $l_j$ des jambes déterminée par le capteur 34.

Par ailleurs, l'unité de pilotage 36 est adaptée pour recevoir, sur le lien descendant 18A du réseau de transmission d'informations 18, un ensemble de paramètres d'exploitation permettant de modifier la commande des charges imposée par l'utilisateur depuis le clavier 28.

Bien que le réseau de transmission d'informations 18 puisse être de tout type adapté, pour des raisons de clarté de la figure 2, chaque paramètre d'exploitation est supposé être communiqué à l'unité de pilotage 36 sur une entrée spécifique.

En particulier, sur une première entrée 64, l'unité de pilotage 36 reçoit une valeur $Pd_i$ représentative d'une puissance totale disponible allouée pour l'abonné i considéré.

De même, l'unité de pilotage 36 est adaptée pour adresser à l'unité centrale de gestion de puissance 20, sur le lien montant 18B du réseau de transmission d'informations, un ensemble de variables d'exploitation permettant à l'unité centrale de gestion de puissance 20 de répartir la puissance disponible entre les différents abonnés, et notamment de définir une puissance totale disponible $Pd_i$ allouée à chaque abonné.

Comme précédemment, bien que le réseau de transmission d'informations 18 puisse être de tout type adapté, chaque variable d'exploitation est supposée être communiquée depuis l'unité de pilotage sur une sortie spécifique.

Une première sortie 72 est adaptée pour adresser, à l'unité centrale de gestion de puissance, la puissance nominale maximale $P_{24}$ consommée par l'actionneur 24 en cas de fonctionnement, telle qu'elle a été calculée par l'unité de pilotage 36 à partir de la fonction caractéristique $f_{24}$. Une deuxième sortie 74 permet la transmission vers l'unité centrale de pilotage d'informations de la puissance nominale maximale $P_{26}$ consommée par l'actionneur 26 en cas de fonctionnement, telle qu'elle a été calculée par l'unité de pilotage 36 à partir de la fonction caractéristique $f_{26}$.

Une troisième sortie 76 permet la transmission vers l'unité centrale de gestion de puissance 20 de la puissance totale notée $Pc_i$ effectivement consommée par l'abonné i. La puissance totale $Pc_i$ est déterminée par exemple à partir d'une valeur caractéristique de la puissance normalement consommée par chaque charge. En variante, la puissance totale $Pc_i$ effectivement consommée est déterminée à partir de l'intensité alimentant chaque actionneur, cette intensité étant mesurée par un capteur placé sur le fil d'alimentation de l'actionneur.

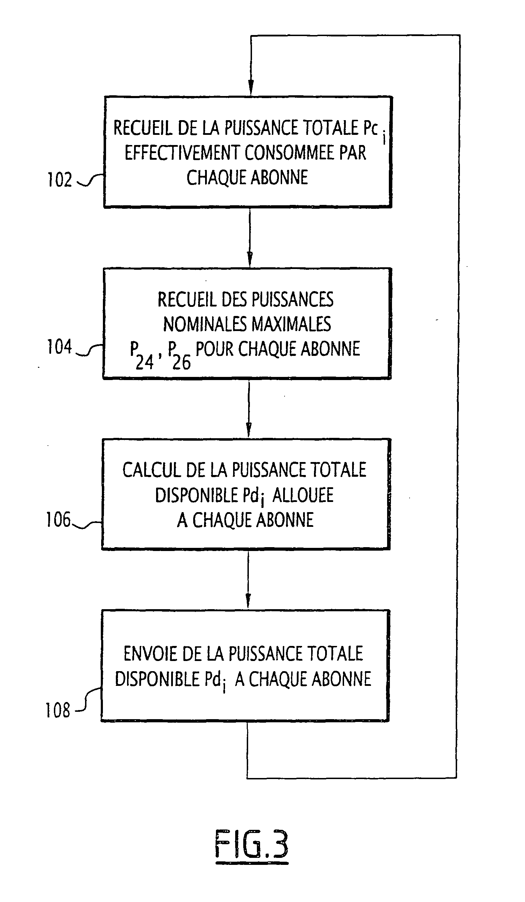

L'unité centrale de gestion de puissance 20 est adaptée pour calculer et pour adresser à chaque unité locale de gestion de puissance 16A, 16B, 16C, la puissance totale disponible $Pd_i$ allouée à l'abonné i correspondant. Le calcul de la puissance totale disponible $Pd_i$ allouée à un abonné i sera décrit en regard de la figure 3.

L'unité centrale de gestion de puissance 20 comporte une entrée de réception d'une valeur de puissance maximale utilisable PMU qui ne peut être dépassée pour l'ensemble des abonnés. Cette puissance maximale utilisable PMU est fournie par un autre calculateur de l'avion en fonction de la puissance effectivement disponible dans l'avion.

L'installation de gestion de puissance 12 est adaptée pour permettre à chaque abonné d'utiliser seulement la puissance totale disponible $Pd_i$ qui lui est allouée. A cet effet, l'unité locale de gestion de puissance 36 de chaque abonné est adaptée pour, en fonction des demandes formulées par l'utilisateur depuis le clavier 28, commander d'une manière adaptée chaque charge 24, 26 mise à la disposition de l'utilisateur afin que la puissance totale consommée par l'abonné soit toujours inférieure à la puissance totale disponible $Pd_i$ allouée à l'abonné.

A cet effet, l'unité de pilotage 36 commande une réduction ou une augmentation de la vitesse des actionneurs, lors de leur commande, à l'aide de la régulation de type PWM, afin que la puissance consommée n'excède pas la puissance totale disponible $Pd_i$ allouée à l'abonné.

Sur la figure 3 est illustré l'algorithme mis en oeuvre en continu par l'unité centrale de gestion de puissance 20 lors du fonctionnement de l'installation. Cet algorithme cyclique est mis en oeuvre en boucle et est adapté pour assurer le calcul et la modification des valeurs de puissance totale disponible $Pd_i$ allouée à chaque abonné i, en fonction des conditions effectives de fonctionnement de l'ensemble des abonnés, et de la puissance maximale utilisable PMU.

A l'étape 102, l'unité centrale de gestion de puissance 20 recueille, pour chaque unité locale de gestion de puissance 16A, 16B, 16C la puissance totale $Pc_i$ effectivement consommée par l'abonné correspondant. Pour ce faire, les unités locales de gestion de puissance 16A, 16B, 16C adressent périodiquement, à une fréquence de quelques hertz, une information représentative de la puissance totale $Pc_i$ effectivement consommée par l'abonné associé.

Dans un premier mode de réalisation, la puissance totale effectivement consommée $Pc_i$ est donnée par la somme des puissances nominales mémorisées pour les seules charges j effectivement en cours de fonctionnement.

Dans un second mode de réalisation, la puissance totale effectivement consommée $Pc_i$ est donnée par la somme des puissances instantanées réellement consommées par les charges j de l'abonné i.

Suivant d'autres modes de réalisation, l'information représentative de la puissance totale effectivement consommée est constituée, suivant le cas, soit de l'ensemble des puissances nominales $P_j$ des charges effectivement en cours de fonctionnement, soit, dans un autre mode de réalisation, de l'ensemble des puissances instantanées $p_j$ réellement consommées par les charges de l'abonné.

A l'étape 104, l'unité centrale de gestion de puissance 20 recueille les puissances nominales maximales $P_{24}$ et $P_{26}$ pour chaque abonné. Ce recueil s'effectue à la même fréquence que le recueil de la puissance totale $Pc_i$ effectivement consommée par chaque abonné.

A l'étape 106, l'unité centrale de gestion de puissance 20 calcule une nouvelle puissance totale disponible $Pd_i$ allouée pour chaque abonné. Chaque nouvelle puissance totale disponible $Pd_i$ est calculée en fonction de la puissance totale effectivement consommée $Pc_i$ et des puissances nominales maximales $P_{24}$ et $P_{26}$ calculées pour chaque abonné. Ainsi, la puissance totale disponible $Pd_i$ allouée à chaque abonné est calculée par l'unité centrale de gestion de puissance 20 en tenant compte des informations morphologiques de chaque passager.

En particulier, la puissance totale disponible $Pd_i$ allouée à un abonné est d'autant plus grande que les puissances nominales maximales $P_{24}$, $P_{26}$ calculées pour l'abonné sont grandes.

Par exemple, la nouvelle puissance totale disponible $Pd_i$ est donnée par la formule :

$$Pd_i = (P_{24} + P_{26}) \times \left(1 + \frac{Pc_i}{2\,(P_{24} + P_{26})}\right)$$

$$\text{Si } Pc_i = 0 \text{ alors } Pd_i = P_{24} + P_{26}$$

$$\text{Si } Pc_i = P_{24} + P_{26} \text{ alors } Pd_i = \frac{3}{2}\,(P_{24} + P_{26})$$

A l'étape 108, les nouvelles puissances totales disponibles $Pd_i$ calculées pour être allouées à chaque abonné sont adressées à l'abonné afin que chaque unité locale de gestion de puissance 16A, 16B, 16C assure une commande des charges, de sorte que la puissance totale consommée reste inférieure à cette nouvelle puissance totale disponible allouée.

On comprend que la gestion de la puissance étant effectuée en tenant compte d'informations morphologiques portant sur le passager, alors même que le passager ne requiert pas de puissance, le procédé de gestion de puissance mis en oeuvre est amélioré, puisqu'il prend en compte, de manière anticipée, les besoins futurs de chaque passager, ces besoins variant en fonction des critères morphologiques du passager.

**Revendications**

1. Cabine d'un avion comportant :

   - au moins deux sièges (14A, 14B, 14C) comportant chacun au moins deux éléments mobiles l'un par rapport à l'autre et au moins un actionneur (24, 26) pour le déplacement relatif de ces éléments mobiles,
   - au moins une unité centrale (20) de gestion de puissance dans la cabine pour allouer une puissance totale

disponible (Pd$_i$) à chaque siège,

**caractérisée en ce que** chaque siège (14A, 14B, 14C) comporte des moyens (30, 32, 34) de relevé d'au moins une information morphologique du passager assis sur le siège, et des moyens (18B) de transmission de données dépendant de la ou chaque information morphologique vers l'unité centrale de gestion de puissance (20), et **en ce que** ladite unité centrale de gestion de puissance (20) est adaptée pour allouer à chaque siège (14A, 14B, 14C) une puissance totale disponible (Pd$_i$) dépendant de la ou chaque information morphologique.

2. Cabine selon la revendication 1, **caractérisée en ce que** lesdits moyens de relevé comportent un capteur (30) de mesure du poids du passager.

3. Cabine selon la revendication 1 ou 2, **caractérisée en ce que** lesdits moyens de relevé comportent un capteur (32, 34) de mesure de la taille d'au moins une partie du passager.

4. Cabine selon l'une quelconque des revendications précédentes, **caractérisée en ce qu'**elle comporte des moyens (36) de calcul, pour chaque siège, d'une puissance nominale maximale (P$_{24}$, P$_{26}$) pouvant être consommée par le ou chaque actionneur (24, 26) du siège à partir de la ou chaque information morphologique et des caractéristiques du ou de chaque actionneur, et l'unité centrale de gestion de puissance (20) est adaptée pour allouer à chaque siège une puissance totale disponible (Pd$_i$) dont la valeur dépend des puissances nominales maximales (P$_{24}$, P$_{26}$) calculées pour chaque siège.

5. Cabine selon la revendication 4, **caractérisée en ce que** la puissance totale disponible (Pd$_i$) allouée à chaque siège est d'autant plus grande que la ou chaque puissance nominale maximale (P$_{24}$, P$_{26}$) calculée pour le siège est grande.

6. Cabine selon la revendication 4 ou 5, **caractérisée en ce que** chaque siège (14A, 14B, 14C) comporte une unité locale de gestion de puissance (16A, 16B, 16C) à laquelle sont reliés les moyens (30, 32, 34) de relevé d'au moins une information morphologique, et **en ce que** chaque unité locale de gestion de puissance (16A, 16B, 16C) comporte des moyens propres (36, 54) de calcul de la puissance nominale maximale (P$_{24}$, P$_{26}$) pouvant être consommée par le ou chaque actionneur du siège à partir de la ou chaque information morphologique et des caractéristiques du ou de chaque actionneur.

7. Cabine selon la revendication 6, **caractérisée en ce que** chaque unité locale de gestion de puissance (16A, 16B, 16C) comporte des moyens (18B) de transmission d'une information dépendant de la ou chaque puissance nominale maximale (P$_{24}$, P$_{26}$) pouvant être consommée par un actionneur (24, 26) vers l'unité centrale de gestion de puissance (20).

8. Cabine selon la revendication 6 ou 7, **caractérisée en ce que** ladite unité centrale de gestion de puissance (20) comporte des moyens (18A) pour adresser à chaque unité locale de gestion de puissance (16A, 16B, 16C) une puissance totale disponible allouée (Pd$_i$) et chaque unité locale de gestion de puissance (16A, 16B, 16C) est propre à commander le ou chaque actionneur (24, 26) pour que la puissance totale consommée (Pc$_i$) soit inférieure à la puissance totale disponible allouée (Pd$_i$).

## Claims

1. Aircraft cabin comprising:

   - at least two seats (14A, 14B, 14C) which each comprise at least two elements which can be moved relative to each other and at least one actuator (24, 26) for the relative displacement of these movable elements,
   - at least one central power control unit (20) in the cabin in order to allocate a total available power level (Pd$_i$) to each seat,

   **characterised in that** each seat (14A, 14B, 14C) comprises means (30, 32, 34) for reading at least one item of morphological information of the passenger sitting in the seat, and means (18B) for transmitting information to the central power control unit (20) in accordance with the or each item of morphological information, and **in that** the central power control unit (20) is capable of allocating to each seat (14A, 14B, 14C) a total available power level (Pd$_i$) in accordance with the or each item of morphological information.

**2.** Cabin according to claim 1, **characterised in that** the reading means comprise a sensor (30) for measuring the weight of the passenger.

**3.** Cabin according to claim 1 or 2, **characterised in that** the reading means comprise a sensor (32, 34) for measuring the size of at least a portion of the passenger.

**4.** Cabin according to any one of the preceding claims, **characterised in that** it comprises means (36) for calculating, for each seat, a maximum nominal power level ($P_{24}$, $P_{26}$) that can be consumed by the or each actuator (24, 26) of the seat based on the or each item of morphological information and the features of the or each actuator, and the central power control unit (20) is capable of allocating to each seat a total available power level ($Pd_i$) whose value depends on the maximum nominal power levels ($P_{24}$, $P_{26}$) calculated for each seat.

**5.** Cabin according to claim 4, **characterised in that** the total available power level ($Pd_i$) allocated to each seat becomes higher as the or each maximum nominal power level ($P_{24}$, $P_{26}$) calculated for the seat becomes higher.

**6.** Cabin according to claim 4 or 5, **characterised in that** each seat (14A, 14B, 14C) comprises a local power control unit (16A, 16B, 16C) to which means (30, 32, 34) for reading at least one item of morphological information are connected, and **in that** each local power control unit (16A, 16B, 16C) comprises suitable means (36, 54) for calculating the maximum nominal power level ($P_{24}$, $P_{26}$) that can be consumed by the or each actuator of the seat based on the or each item of morphological information and the features of the or each actuator.

**7.** Cabin according to claim 6, **characterised in that** each local power control unit (16A, 16B, 16C) comprises means (18B) for transmitting information to the central power control unit (20) in accordance with the or each maximum nominal power level ($P_{24}$, $P_{26}$) that can be consumed by an actuator (24, 26).

**8.** Cabin according to claim 6 or 7, **characterised in that** the central power control unit (20) comprises means (18A) for transmitting an allocated total available power level ($Pd_i$) to each local power control unit (16A, 16B, 16C) and each local power control unit (16A, 16B, 16C) is capable of controlling the or each actuator (24, 26) so that the total power ($Pc_i$) consumed is less than the total available power ($Pd_i$) allocated.

**Patentansprüche**

**1.** Flugzeugkabine mit:

- zumindest zwei Sitzen (14A, 14B, 14C) mit jeweils zumindest zwei zueinander beweglichen Elementen und zumindest einem Antriebsmittel (24, 26) für die relative Bewegung dieser beweglichen Elemente,
- zumindest einer zentralen Einheit (20) zur Steuerung des Stromes in der Kabine, um jedem Sitz einen insgesamt verfügbaren Strom ($Pd_i$) zuzuordnen,

**dadurch gekennzeichnet, dass** jeder Sitz (14A, 14B, 14C) Erfassungsvorrichtungen (30, 32, 34) für zumindest eine morphologische Information des auf dem Sitz sitzenden Passagiers und Vorrichtungen (18B) zur Übertragung der von der oder der jeweiligen morphologischen Information abhängigen Daten an die zentrale Einheit zur Steuerung des Stromes (20) aufweist, und dass die zentrale Einheit zur Steuerung des Stromes (20) dafür eingerichtet ist jedem Sitz (14A, 14B, 14C) einen insgesamt verfügbaren Strom ($Pd_i$) zuzuordnen, der von der oder der jeweiligen morphologischen Information abhängt.

**2.** Kabine gemäß Anspruch 1, **dadurch gekennzeichnet, dass** die Erfassungsvorrichtungen einen Fühler (30) zum Messen des Gewichtes des Passagiers aufweisen.

**3.** Kabine gemäß Anspruch 1 oder 2, **dadurch gekennzeichnet, dass** die Erfassungsvorrichtungen einen Fühler (32, 34) zum Messen der Größe zumindest eines Teils des Passagiers aufweisen.

**4.** Kabine gemäß irgendeinem der vorherigen Ansprüche, **dadurch gekennzeichnet, dass** sie Vorrichtungen (36) zur Berechnung eines maximalen Nominalstromes ($P_{24}$, $P_{26}$) für jeden Sitz aufweist, der von dem oder dem jeweiligen Antriebsmittel (24, 26) des Sitzes verbraucht werden kann, und zwar ausgehend von der oder der jeweiligen morphologischen Information und den Eigenschaften des oder des jeweiligen Antriebsmittels, und die zentrale Einheit zur Steuerung des Stromes (20) ist dafür eingerichtet jedem Sitz einen insgesamt verfügbaren Strom (Pd$_i$) zuzuweisen, dessen Wert von dem für jeden Sitz berechneten maximalen Nominalstrom (P$_{24}$, P$_{26}$) abhängt.

5. Kabine gemäß Anspruch 4, **dadurch gekennzeichnet, dass** der jedem Sitz zugewiesene insgesamt verfügbare Strom (Pd$_i$) umso größer ist, desto größer der oder der jeweilige für den Sitz berechnete maximale Nominalstrom (P$_{24}$, P$_{26}$) ist.

6. Kabine gemäß Anspruch 4 oder 5, **dadurch gekennzeichnet, dass** jeder Sitz (14A, 14B, 14C) eine lokale Einheit zur Steuerung des Stromes (16A, 16B, 16C) aufweist, mit welcher die Vorrichtungen (30, 32, 34) zur Erfassung zumindest einer morphologischen Information verbunden sind, und dass jede lokale Einheit zur Steuerung des Stromes (16A, 16B, 16C) eigene Vorrichtungen (36, 54) zur Berechnung des maximalen Nominalstromes (P$_{24}$, P$_{26}$) aufweist, der von dem oder dem jeweiligen Antriebsmittel des Sitzes verbraucht werden kann, und zwar ausgehend von der oder der jeweiligen morphologischen Information und den Eigenschaften des oder des jeweiligen Antriebsmittels.

7. Kabine gemäß Anspruch 6, **dadurch gekennzeichnet, dass** jede lokale Einheit zur Steuerung des Stromes (16A, 16B, 16C) Vorrichtungen (18B) zur Übertragung einer Information, die von dem oder dem jeweiligen maximalen Nominalstrom (P$_{24}$, P$_{26}$) abhängt, der von einem Antriebsmittel (24, 26) verbraucht werden kann, an die zentrale Einheit zur Steuerung des Stromes (20) aufweist.

8. Kabine gemäß Anspruch 6 oder 7, **dadurch gekennzeichnet, dass** die zentrale Einheit zur Steuerung des Stromes (20) Vorrichtungen (18A) aufweist, um jeder lokalen Einheit zur Steuerung des Stromes (16A, 16B, 16C) einen zugewiesenen insgesamt verfügbaren Strom (Pd$_i$) mitzuteilen, und jede lokale Einheit zur Steuerung des Stromes (16A, 16B, 16C) geeignet ist das oder das jeweilige Antriebsmittel (24, 26) derart zu steuern, dass der verbrauchte Gesamtstrom (Pc$_i$) geringer als der zugewiesene, insgesamt verfügbare Strom (Pd$_i$) ist.

FIG.1

FIG.2

EP 1 582 458 B1

RECUEIL DE LA PUISSANCE TOTALE $Pc_i$
EFFECTIVEMENT CONSOMMEE PAR
CHAQUE ABONNE

102

RECUEIL DES PUISSANCES
NOMINALES MAXIMALES
$P_{24}$, $P_{26}$ POUR CHAQUE ABONNE

104

CALCUL DE LA PUISSANCE TOTALE
DISPONIBLE $Pd_i$ ALLOUEE
A CHAQUE ABONNE

106

ENVOIE DE LA PUISSANCE TOTALE
DISPONIBLE $Pd_i$ A CHAQUE ABONNE

108

FIG.3